(19) **Europäisches Patentamt**
**European Patent Office**
**Office européen des brevets**

(11) **EP 4 393 761 A1**

(12) **EUROPEAN PATENT APPLICATION**

(43) Date of publication:
**03.07.2024 Bulletin 2024/27**

(51) International Patent Classification (IPC):
**B60L 53/22** (2019.01)     **H02M 3/00** (2006.01)
**H02J 7/06** (2006.01)

(21) Application number: **23217458.1**

(22) Date of filing: **18.12.2023**

(52) Cooperative Patent Classification (CPC):
**B60L 53/22; H02J 7/06; H02M 1/0016;**
**H02M 1/0025; H02M 3/01; H02M 3/157;**
B60L 2210/10; B60L 2240/526; H02J 2207/20;
H02J 2310/48

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **30.12.2022 CN 202211727228**

(71) Applicant: **Aptiv Electric Systems Co., Ltd.**
**201805 Shanghai (CN)**

(72) Inventors:
• **WAN, Cheng**
  **Shanghai, 201805 (CN)**

• **QIAN, Lewei**
  **Shanghai, 201805 (CN)**
• **PENG, Dengming**
  **Shanghai, 201805 (CN)**
• **CHEN, Fei**
  **Shanghai, 201805 (CN)**
• **QIAO, Haibo**
  **Shanghai, 201805 (CN)**
• **YI, Jianlei**
  **Shanghai, 201805 (CN)**
• **ZHAO, Pengtao**
  **Shanghai, 201805 (CN)**

(74) Representative: **Bardehle Pagenberg**
**Partnerschaft mbB**
**Patentanwälte Rechtsanwälte**
**Prinzregentenplatz 7**
**81675 München (DE)**

(54) **ON-BOARD CHARGER CONTROL SYSTEM AND METHOD**

(57) The disclosure provides an on-board charger control system and method. The on-board charger comprises a rectifier and a CLLC resonant converter connected in series with the rectifier to charge an on-board battery, and the provided on-board charger control method comprises: determining a desired output voltage $V_{dc\_ref}$ for the rectifier based on a detected battery voltage $V_{dc\_out}$; determining a desired output current $I_{dc\_out\_ref}$ for the CLLC resonant converter based on the battery voltage $V_{dc\_out}$; determining a switching frequency $f$ for the CLLC resonant converter based on a voltage gain M and a quality factor Q of the CLLC resonant converter; performing switching control on the rectifier so that the output voltage $V_{dc}$ of the rectifier is near or equal to the determined desired output voltage $V_{dc\_ref}$ of the rectifier; and performing switching control on the CLLC resonant converter, wherein performing switching control on the CLLC resonant converter comprising performing switching control on the CLLC resonant converter based on the switching frequency f. The on-board charger control method proposed in the disclosure enables an effective all-regime control for the rectifier and CLLC resonant converter.

FIG. 7

**Description**

TECHNICAL FIELD

The present invention relates generally to electric vehicles, and in particular to a system and method for control the on-board charger of the electric vehicle.

TECHNICAL BACKGROUND

With the boom of electric vehicles, high-voltage is also evolving, where the original 400V battery packs are gradually evolved to 800V packs. As battery packs with 800V direct voltage are widely used in electric vehicles, on-board chargers (OBCs) for electric vehicles are widely adapted to the direct voltage of 800V of battery packs.

The on-board charger converts alternating current (AC) of, for example, 200V/50Hz from the power grid into direct current (DC) as required by the battery of the electric vehicle. For 400V battery packs, the variation range of battery voltage during operation is generally 300V-450V; for 800V battery packs, the variation range of battery voltage during operation is generally 680V-800V. Based on the increase of battery voltage, the charging power of on-board charger has also increased significantly, for example, the charging power has been increased from 6.6KW at a battery voltage of 400V to 11KW at a battery voltage of 800V, and 11 KW has become the mainstream power level in 800 V electric vehicle system. Additionally, with the development of on-board chargers and the increase of voltage, functions of on-board chargers are no longer limited to drawing power from the power grid to charge the battery pack of the electric vehicle, and outputting from the battery pack to supply power to the electric equipment outside the vehicle has also become one of the functions of on-board chargers. 800V-11kw bi-directional on-board charger has become a very popular product in the market.

Typically, an on-board charger mainly comprises an AC-DC converter and a DC-DC converter. The AC-DC converter, as a pre-stage to the DC-DC converter, converts the AC power with, for example, 220V/50Hz (as an example, from the power grid or from a charging pile) to a DC power with a required voltage, 500V for example. The DC-DC converter converts the converted DC power by the AC-DC converter into a required DC power which is provided to the energy system for distribution. The DC-DC converter enables variable output voltages to cope with different loads. In a bi-directional on-board charger, a CLLC resonant converter is usually used as a DC-DC converter for bi-directional DC conversion. When the on-board charger is charging an on-board battery, the CLLC resonant converter converts the converted DC power by the AC-DC converter into a required DC which is provided to the battery. However, for the 800V electric vehicle system today, the actual battery-side voltage output from the CLLC resonant converter varies over a very wide range (typically, 680V to 800V), and likewise the power also varies over a very wide range (typically, 0 to 11kw). In other words, the CLLC resonant converter has a very wide operating interval.

Ideally, it is desired that the CLLC resonant converter operates normally, stably and controllably throughout its operating interval. However, under different operating conditions, the voltage gain of the CLLC resonant converter shows a non-linear relationship with respect to its operation control frequency. Such a non-linear characteristic may significantly affect the design for control systems, leading to the following three main problems:

☐ ·when the load varies dynamically, it is susceptible to problems in the control loop;

☐ ·when operating in the operating interval that shows a non-linear characteristic, it is susceptible to problems of control frequency oscillation;

☐ ·when operating in the operating interval that shows a non-linear characteristic,, it is susceptible to problems of unstable output waveforms of on-board charger operation.

When faced with the problems above, a conventional solution is proposed to avoid the non-linear region by hardware design of the resonance parameters of the CLLC resonant converter. This solution determines a variation interval of the gain curve by knowing the range of actual load and also the range of output power, so that the resonance parameters of the CLLC resonant converter can be set to ensure that the voltage gain of the CLLC resonant converter varies linearly with the frequency at which it is controlled for its operation over the actual operating load range. In designing hardware parameters, further consideration may be given to the effects of battery interference due to excessive changes in the control frequency as well as the need for efficiency and power density. In general applications, in order to adapt to a wide range of load variations and a small range of load variations both, it is usually ensured that the gain curve is linear in the range of $(0.8\omega_n, 1.2\omega_n)$ through the design of hardware parameters, where $\omega_n$ is the per-unit control frequency. However, in one aspect, since the setting of resonance parameters is realized by hardware design, such resonance parameters are fixed once set, which leads to the fact that this solution cannot be well adapted to the entire operating range of today's high-voltage on-board chargers; in another aspect, the adjusted CLLC resonant converter may still enter into operating within the nonlinear region.

That is, conventional solutions may not be well adapted to the entire operating range of today's high-voltage on-board chargers, and the possibility that the gain of CLLC resonant converter in the conventional solutions may change in a non-linear manner has not been eliminated.

SUMMARY OF THE INVENTION

The technical solution proposed in the invention is intended to solve the technical problem that conventional control schemes for the on-board charger cannot be well adapted to the entire operation interval of the high-voltage vehicle charger, and it is difficult to enable the CLLC resonant converter to operate normally, stably and controllably throughout the operation interval thereof.

In one aspect of the invention, an on-board charger control system is provided, the on-board charger comprising a rectifier and a CLLC resonant converter connected in series with the rectifier, to charge an on-board battery, the on-board charger control system comprising: a rectification control device, configured to perform switching control on the rectifier, so that the output voltage $V_{dc}$ of the rectifier is near or equal to a desired output voltage $V_{dc\_ref}$ of the rectifier; a resonance control device, configured to perform switching control on the CLLC resonant converter; and an additional control device, configured to: determine the desired output voltage $V_{dc\_ref}$ for the rectifier based on a battery voltage $V_{dc\_out}$, and provide the determined desired output voltage $V_{dc\_ref}$ to the rectification control device; determine a desired output current $I_{dc\_out\_ref}$ for the CLLC resonant converter based on the battery voltage $V_{dc\_out}$, and provide the determined desired output current $I_{dc\_out\_ref}$ to the resonance control device; and provide, to the resonance control device, a switching frequency $f$ of the CLLC resonant converter, so that the resonance control device performs switching control on the CLLC resonant converter based on the switching frequency f of the CLLC resonant converter, wherein the switching frequency f is determined based on a voltage gain M and a quality factor Q of the CLLC resonant converter.

In at least one embodiment of one aspect of the invention, the additional control device is further configured to: determine the desired output voltage $V_{dc\_ref}$ for the rectifier based on the battery voltage $V_{dc\_out}$ so that the voltage gain M of the CLLC resonant converter is less than 1; and determine the desired output current $I_{dc\_out\_ref}$ for the CLLC resonant converter based on the battery voltage $V_{dc\_out}$, to determine the quality factor Q of the CLLC resonant converter; and wherein the switching frequency $f$ of the CLLC resonant converter determined based on the voltage gain M and quality factor Q of the CLLC resonant converter is greater than or equal to a resonant frequency $f_1$ of the CLLC resonant converter, and wherein the resonant frequency $f_1$ is based on an inductance and capacitance on a primary side of a fundamental wave equivalent circuit of the CLLC resonant converter.

In at least one embodiment of one aspect of the invention, the additional control device further comprises: a storage device, for storing a correspondence of the voltage gain M, the quality factor Q to a per-unit switching frequency $f_n$ of the CLLC resonant converter, wherein the per-unit switching frequency $f_n$ is a ratio of the switching frequency $f$ to the resonant frequency $f_1$; and a frequency determining device, configured to determine, based on the correspondence stored in the storage device, the switching frequency $f$ of the CLLC resonant converter corresponding to the determined voltage gain M and quality factor Q of the CLLC resonant converter.

In at least one embodiment of one aspect of the invention, the resonance control device is further configured to: perform switching control on the CLLC resonant converter at the switching frequency $f$ of the CLLC resonant converter; acquire an output current $I_{dc\_out}$ of the CLLC resonant converter; in response to a difference DIFF between the acquired output current $I_{dc\_out}$ of the CLLC resonant converter and the desired output current $I_{dc\_out\_ref}$ of the CLLC resonant converter being greater than a pre-determined threshold $T_{DIFF}$, adjust the switching frequency $f$ of the CLLC resonant converter to an adjusted switching frequency $f_a$ by: searching the storage device for the stored correspondence of the voltage gain M, the quality factor Q to the per-unit switching frequency $f_n$ of the CLLC resonant converter, to determine a possible value for the adjusted switching frequency $f_a$, or increasing or decreasing, heuristically one or more times, the switching frequency f applied to the CLLC resonant converter in the vicinity of the switching frequency $f$ of the CLLC resonant converter based on the difference DIFF, until the difference DIFF is less than the threshold $T_{DIFF}$; and perform switching control on the CLLC resonant converter at the adjusted switching frequency $f_a$.

In at least one embodiment of one aspect of the invention, the battery voltage $V_{dc\_out}$ has a desired voltage range in operation, the desired voltage range being $[V_{min}, V_{max}]$, and the additional control device is further configured to: determine the desired output voltage $V_{dc\_ref}$ to be $V_{min}$, and the desired output current $I_{dc\_out\_ref}$ to be $(P_{max}/V_{dc\_out})*k_1$, if the battery voltage $V_{dc\_out}$ satisfies $(V_{dc\_out}*N+V_{compen}) \leq V_{min}$, determine the desired output voltage $V_{dc\_ref}$ to be $(V_{dc\_out}*N+V_{compen})$ and the desired output current $I_{dc\_out\_ref}$ to be $(P_{max}/V_{dc\_out})$, if the battery voltage $V_{dc\_out}$ satisfies $V_{min}<(V_{dc\_out}*N+V_{compen}) \leq V_{max}$, or determine the desired output voltage $V_{dc\_ref}$ to be $V_{max}$, and the desired output current $I_{dc\_out\_ref}$ to be $(P_{max}/V_{dc\_out})*k_2$, if the battery voltage $V_{dc\_out}$ satisfies $(V_{dc\_out}*N+V_{compen})>V_{max}$, wherein N refers to a voltage ratio of a primary side voltage to a secondary side voltage of a transformer in the CLLC resonant converter, $V_{compen}$ refers to an empirical compensation value associated with the desired voltage range and harmonic factors of the CLLC resonant converter, $P_{max}$ refers to a specified value of a maximum power given by a vehicle control unit (VCU) according to conditions of the on-board battery, and $k_1$ and $k_2$ refer to predetermined design derating factors and are both less than 1.

In at least one embodiment of one aspect of the invention, for an 800V on-board charger, $V_{min}$ is taken as 680 volts, $V_{max}$ is taken as 800 volts, and $V_{compen}$ is taken as 20 volts.

In another aspect of the invention, an on-board charger system is provided, which comprises: an on-board charger, comprising a rectifier and a CLLC resonant converter connected in series with the rectifier; and the on-board charger control system of one aspect of the invention, the on-board charger control system coupled to the on-board charger.

In still another aspect of the invention, an on-board charger control method is provided, the on-board charger comprising a rectifier and a CLLC resonant converter connected in series with the rectifier, to charge an on-board battery, the on-board charger control method comprising: determining a desired output voltage $V_{dc\_ref}$ for the rectifier based on a detected battery voltage $V_{dc\_out}$; determining a desired output current $I_{dc\_out\_ref}$ for the CLLC resonant converter based on the battery voltage $V_{dc\_out}$; determining a switching frequency $f$ for the CLLC resonant converter based on a voltage gain M and a quality factor Q of the CLLC resonant converter; performing switching control on the rectifier so that the output voltage $V_{dc}$ of the rectifier is near or equal to the determined desired output voltage $V_{dc\_ref}$ of the rectifier; and performing switching control on the CLLC resonant converter, wherein performing switching control on the CLLC resonant converter comprising performing switching control on the CLLC resonant converter based on the determined switching frequency $f$ of the CLLC resonant converter.

In at least one embodiment of still another aspect of the invention, determining the desired output voltage $V_{dc\_ref}$ for the rectifier based on the battery voltage $V_{dc\_out}$ comprises determining the desired output voltage $V_{dc\_ref}$ for the rectifier based on the battery voltage $V_{dc\_out}$ so that the voltage gain M of the CLLC resonant converter is less than 1; determining the desired output current $I_{dc\_out\_ref}$ for the CLLC resonant converter based on the battery voltage $V_{dc\_out}$ comprises determining the desired output current $I_{dc\_out\_ref}$ for the CLLC resonant converter based on the battery voltage $V_{dc\_out}$, to determine the quality factor Q of the CLLC resonant converter; and the switching frequency $f$ of the CLLC resonant converter determined based on the voltage gain M and quality factor Q of the CLLC resonant converter is greater than or equal to a resonant frequency $f_1$ of the CLLC resonant converter, wherein the resonant frequency $f_1$ is based on an inductance and capacitance on a primary side of a fundamental wave equivalent circuit of the CLLC resonant converter.

In at least one embodiment of still another aspect of the invention, the method further comprises: based on a pre-stored correspondence of the voltage gain M, the quality factor Q to a per-unit switching frequency $f_n$ of the CLLC resonant converter, determining the switching frequency $f$ of the CLLC resonant converter corresponding to the determined voltage gain M and quality factor Q of the CLLC resonant converter.

In at least one embodiment of still another aspect of the invention, performing switching control on the CLLC resonant converter based on the determined switching frequency $f$ of the CLLC resonant converter comprises: performing switching control on the CLLC resonant converter at the determined switching frequency $f$ of the CLLC resonant converter; acquiring an output current $I_{dc\_out}$ of the CLLC resonant converter; in response to a difference DIFF between the acquired output current $I_{dc\_out}$ of the CLLC resonant converter and the desired output current $I_{dc\_out\_ref}$ of the CLLC resonant converter being greater than a pre-determined threshold $T_{DIFF}$, adjusting the determined switching frequency $f$ of the CLLC resonant converter to an adjusted switching frequency $f_a$ by: searching for the pre-stored correspondence of the voltage gain M, the quality factor Q to the per-unit switching frequency $f_n$ of the CLLC resonant converter, to determine a possible value for the adjusted switching frequency $f_a$, or increasing or decreasing, heuristically one or more times, the switching frequency $f$ applied to the CLLC resonant converter in the vicinity of the determined switching frequency $f$ of the CLLC resonant converter based on the difference DIFF, until the difference DIFF is less than the threshold $T_{DIFF}$; and performing switching control on the CLLC resonant converter at the adjusted switching frequency $f_a$.

In at least one embodiment of still another aspect of the invention, the battery voltage $V_{dc\_out}$ has a desired voltage range in operation, the desired voltage range being $[V_{min}, V_{max}]$, determining the desired output voltage $V_{dc\_ref}$ for the rectifier based on the detected battery voltage $V_{dc\_out}$ further comprises: determining the desired output voltage $V_{dc\_ref}$ to be $V_{min}$ if the battery voltage $V_{dc\_out}$ satisfies $(V_{dc\_out}*N+V_{compen}) \leq V_{min}$, determining the desired output voltage $V_{dc\_ref}$ to be $(V_{dc\_out}*N+V_{compen})$ if the battery voltage $V_{dc\_out}$ satisfies $V_{min}<(V_{dc\_out}*N+V_{compen}) \leq V_{max}$, or determining the desired output voltage $V_{dc\_ref}$ to be $V_{max}$ if the battery voltage $V_{dc\_out}$ satisfies $(V_{dc\_out}*N+V_{compen})>V_{max}$, and determining the desired output current $I_{dc\_out\_ref}$ for the CLLC resonant converter based on the battery voltage $V_{dc\_out}$ further comprises: determining the desired output current $I_{dc\_out\_ref}$ to be $(P_{max}/V_{dc\_out})*k_1$ if the battery voltage $V_{dc\_out}$ satisfies $(V_{dc\_out}*N+V_{compebn}) \leq V_{min}$, determining the desired output current $I_{dc\_out\_ref}$ to be $(P_{max}/V_{dc\_out})$ if the battery voltage $V_{dc\_out}$ satisfies $V_{min}<(V_{dc\_out}*N+V_{compen})<V_{max}$, or determining the desired output current $I_{dc\_out\_ref}$ to be $(P_{max}/V_{dc\_out})*k_2$ if the battery voltage $V_{dc\_out}$ satisfies $(V_{dc\_out}*N+V_{compen})>V_{max}$, wherein N refers to a voltage ratio of a primary side voltage to a secondary side voltage of a transformer in the CLLC resonant converter, $V_{compen}$ refers to an empirical compensation value associated with the desired voltage range and harmonic factors of the CLLC resonant converter, $P_{max}$ refers to a specified value of a maximum power given by a vehicle control unit (VCU) according to conditions of the on-board battery, and $k_1$ and $k_2$ refer to predetermined design derating factors and are both less than 1.

With the technical solutions described in the present invention, the desired outputs of both the rectifier and the CLLC resonant converter can be varied based on the battery voltage, allowing the CLLC resonant converter to operate normally, stably, and controllably throughout its operating interval. Thus, compared to the existing hardware implementation, the technical solution proposed in the present invention is better adapted to the very wide ranges of voltage and power variation of high-voltage electric vehicles today.

DESCRIPTION OF FIGURES

FIG. 1 shows an architectural diagram of an example energy system for an electric vehicle.
FIG.2 shows an example topology of a bi-directional on-board charger.
Fig.3 shows an example fundamental equivalent circuit diagram of a CLLC resonant converter.
FIG s. 4-5 show a plot of the voltage gain M versus the per-unit control frequency $\omega_n$ for the CLLC resonant converter under different operating conditions.
FIG. 6 shows a block diagram of an on-board charger control system according to an embodiment of the disclosure.
FIG. 7 shows a flowchart of an on-board charger control method according to an embodiment of the disclosure.

DETAILED DESCRIPTION

In the following description, numerous specific details are set forth. However, it is to be understood that embodiments of the invention may be practiced without these specific details. In other instances, well-known circuits, structures, and technologies have not been shown in detail to avoid obscuring the understanding of the description.

References to "one embodiment," "an embodiment," "an example embodiment," etc., indicate that the embodiment described may include a particular feature, structure, or characteristic, but each embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiment whether or not explicitly described.

For the purposes of the present disclosure, the phrase "A and/or B" is intended to mean either (A), (B), or (A and B). For the purposes of the present disclosure, the phrase "A, B and/or C" is intended to mean either (A), (B), (C), (A and B), (A and C), (B and C), or (A, B and C).

In the following description and claims, the terms "coupled" and "connected," along with their derivatives, may be used. It is to be understood that, these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet co-operate or interact with each other.

Electric vehicles place higher demands on vehicle energy systems, one aspect of which is reflected in the increase in power as well as the increase in usage. On-board charger is an important part of vehicle energy systems, which mainly comprises an AC-DC converter and a DC-DC converter. The AC-DC converter, as a pre-stage to the DC-DC converter, converts the AC power with, for example, 220V/50Hz (as an example, from the grid or from a charging pile) to a DC power with a required voltage, 500V for example. The DC-DC converter converts the converted DC power by the AC-DC converter into a required DC power which is provided to the energy system for distribution. The DC-DC converter enables a variable output voltage to cope with different loads. Demands for the variable output voltage may arise from different loads. Depending on different ambient temperatures, age, etc., even for a same load, demands for output voltage may also vary.

Energy systems with a bi-directional charging and discharging function have been developed as the capacity of on-board batteries has increased. In such application, external power may charge the on-board battery via the OBC, and the on-board battery may also output its own stored power to external electric devices via the OBC. In the latter case, the DC-DC converter becomes a pre-stage DC-DC power conversion module relative to the AC-DC converter.

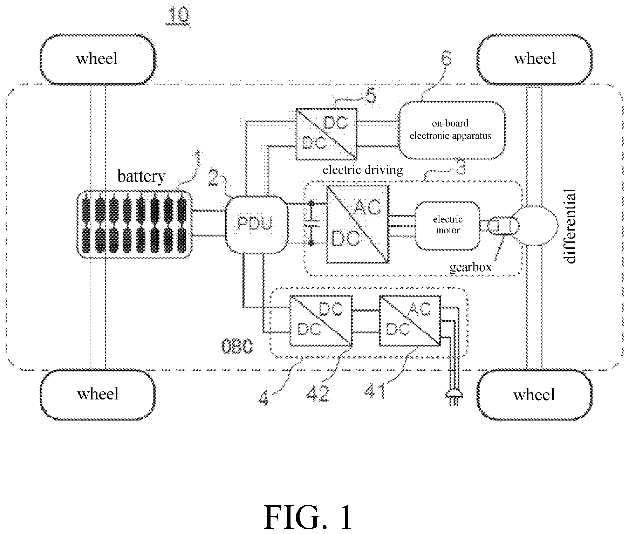

FIG. 1 shows an architectural diagram of an example energy system 10 of an electric vehicle. The example energy system 10 may comprises a battery 1, a power distribution unit (PDU) 2, an electric driving unit 3, an OBC 4, and an on-board electronic device 6.

OBC 4 may draw AC power from the power grid or AC charging pile. OBC 4 converts the drawn AC power into DC power, and provides the DC power to PDU 2 or to battery 1 via PDU 2.

As described above, OBC 4 may comprises an AC-DC converter 41 and a DC-DC converter 42. The AC-DC converter 41 performs a Power Factor Correction (PFC) on the input AC power, and converts the AC power to DC power with a required voltage. The DC-DC converter 42 performs a further conversion on the AC power from the AC-DC converter 41 to achieve DC power output that is required by the load (for example, the battery 1).

In one implementation, the AC-DC converter 41 may be a rectifier. The DC-DC converter 42 may be a CLLC resonant converter. In some embodiments, the pre-stage to the rectifier 41 may further be provided with an electromagnetic interference (EMI) filter. In the case where the DC-DC converter 42 is a CLLC resonant converter, since the CLLC resonant circuit is capable of performing bi-directional DC conversion, the OBC 4 is capable of operating in a bi-directional manner, i.e., in both charging and discharging directions. When the OBC 4 is operating in the charging direction, AC power is converted, via the rectifier 41, into DC power with a required voltage, and then the DC power is converted, by the CLLC resonant converter 42, into a required DC power, and the required DC power is provided to PDU 2 or other loads.

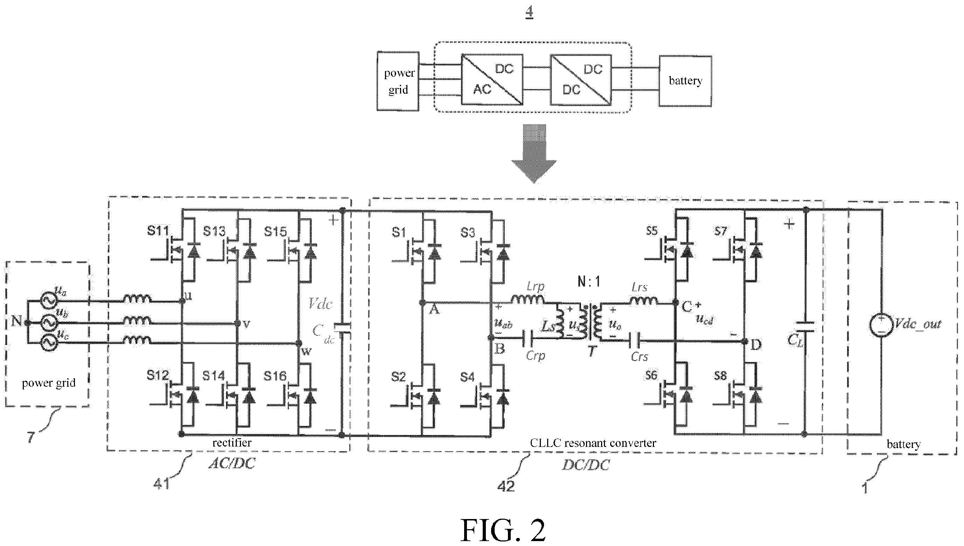

FIG. 2 shows an example topology of the OBC 4. In the implementation shown in FIG. 2, the AC-DC converter 41 takes advantage of a three-phase half-bridge rectifier to cope with high power and bi-directional operation applications. The AC-DC converter 41 comprises a half-bridge rectifier circuit comprising power switching devices S11, S13, S15 on the upper bridge arm and power switching devices S12, S14, S16 on the lower bridge arm. The midpoints of power switching devices S11 and S12 are connected to the u-phase, the midpoints of power switching devices S13 and S14 are connected to the v-phase, and the midpoints of power switching devices S15 and S16 are connected to the w-phase, thereby forming a three-phase interleaved connection. Each power switching device S11-S16 has a body diode connected in reverse parallel therewith at both ends of the power switching device. The power switching devices S11-S16 may be a Metal-Oxide-Semiconductor Field-Effect Transistor (MOSFET) for example. Switching control for each power switching device S11-S16 is realized by providing a control signal to respective gates of the power switching devices S11-S16. Other types of bi-directional rectifier circuits, such as two-phase interleaved rectifier circuits, four-phase interleaved rectifier circuits, etc., may also be adopted to implement the AC-DC converter 41, and the AC-DC converter 41 shown in FIG. 2 is merely an example.

A CLLC resonant converter may be adopted to implement the DC-DC converter 42, which comprises eight power switching devices S1-S8, two high-frequency inductors Lrp, Lrs, two high-frequency capacitors Crp, Crs, and a high-frequency transformer T. The voltage ratio of voltage on the primary side to voltage on the secondary side of the high-frequency transformer T is N:1. Likewise, the power switching devices S1-S8 may be MOSFET. The inductor Lrp along with the capacitor Crp is provided on the primary side of the transformer T, and the inductor Lrs along with the capacitor Crs is provided on the secondary side of the transformer T. The primary side of the transformer T also comprises an H-bridge consisting of the power switching devices S 1-S4, and secondary side comprises an H-bridge consisting of the power switching devices S5-S8. The output of DC-DC converter 42 may be connected to battery 1. When the OBC 4 is operating in the charging direction, the CLLC resonant converter 42 acts as an LLC resonant converter in the direction from the primary side to the secondary side, and the desired DC power resulting from the conversion performed by the CLLC resonant converter 42 is supplied to the battery 1.

In order to understand the gain variation characteristics of CLLC resonant converter 42 and thus effectively control the converter under full operating conditions, the inventor uses the fundamental waveform equivalence method to specifically analyze the gain variation characteristics of the CLLC resonant converter 42 by calculating the input and output gains of the fundamental waveform.

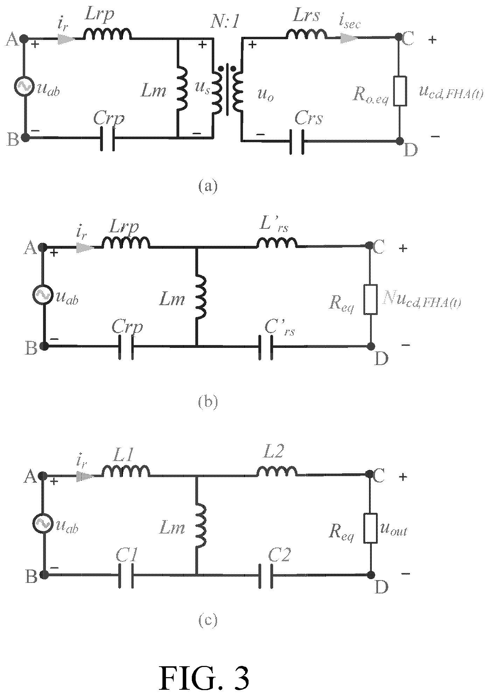

As is shown in FIG. 3, in which part (a) illustrates the actual operating resonant circuit of CLLC resonant converter 42, and part (b) illustrates its fundamental waveform equivalent circuit, and part (c) illustrates a fundamental waveform equivalent circuit obtained by unifying the identifications shown in part (a) and part (b), where $L_1 = L_{rp}$, $L_2 = N^2 L_{rs}$, $C_1 = C_{rp}$, $C_2 = C_{rs}/(N^2)$, $R_{eq} = N^2 R_{o,eq}$, and $u_{out} = Nu_{cd,FHA}$; as a result, the partial impedance of the fundamental waveform equivalent circuit can be defined as:

$$Z_1(j\omega) = j\omega L_1 + \frac{1}{j\omega C_1}, \; Z_m(j\omega) = j\omega L_m, \; Z_2(j\omega) = j\omega L_2 + \frac{1}{j\omega C_2}, \; Q = \sqrt{\frac{L_1}{C_1}} / R_{eq}.$$

On this basis, the voltage gain of CLLC resonant converter 42 can be calculated as:

$$H_f(j\omega) = \frac{u_{out}(j\omega)}{u_{ab}(j\omega)} = \frac{1}{1 + \frac{1}{k}\left[1 - \left(\frac{\omega_1}{\omega}\right)^2\right] + \frac{jQ}{k}\left[\frac{a\omega}{\omega_1} - \frac{b\omega_1}{\omega} + c \cdot \left(\frac{\omega_1}{\omega}\right)^3\right]},$$

$$\omega_1 = \frac{1}{\sqrt{L_1 C_1}}, k = \frac{L_m}{L_1}, h = \frac{L_2}{L_1}, g = \frac{C_2}{C_1} \qquad\qquad b = k + h + \frac{k}{g} + \frac{1}{g}, c = \frac{1}{g}$$

where ; and here $a = k + h + kh$, . Thus, in addition to the hardware parameters of the CLLC resonant converter 42, the voltage gain M of the CLLC resonant

$$\omega_n = \frac{\omega}{\omega_1}$$

converter 42 is related to the per-unit control frequency $\omega_n$ (as described below, ) of the CLLC resonant converter 42 and the quality factor Q. Variations of the value of quality factor Q represents, to some extent, variations

$$Q = \sqrt{\frac{L_1}{C_1}} / R_{eq}$$

of the load (for example, as can be seen from ).

In an embodiment, the LCs on the primary and secondary sides of the transformer T in the CLLC resonant converter 42 are symmetrical, so that h = 1 and g = 1. It can be derived that the voltage gain of the CLLC resonant converter can be expressed as a function of the normalized control frequency $\omega_n$:

$$M(\omega_n) = \left| H_f(j\omega_n) \right| = \left| \frac{1}{X + jY} \right| = \frac{1}{\sqrt{X^2 + Y^2}},$$

where $X = 1 + \frac{1}{k}\left[ 1 - \left(\frac{1}{\omega_n}\right)^2 \right], Y = \frac{Q}{k}\left[ (2k+1)\omega_n - (2k+2)\cdot\frac{1}{\omega_n} + \frac{1}{\omega_n^3} \right], \quad \omega_n = \frac{\omega}{\omega_1}$ .

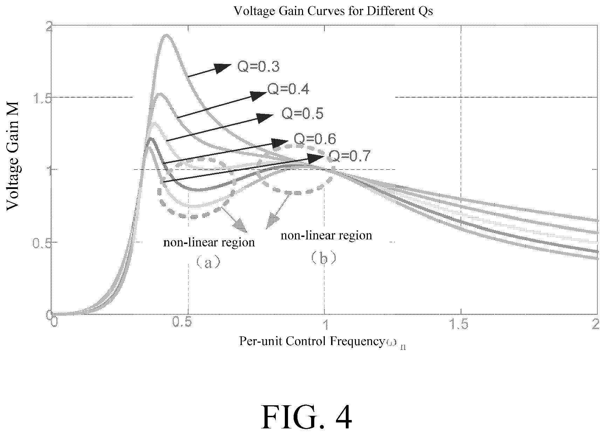

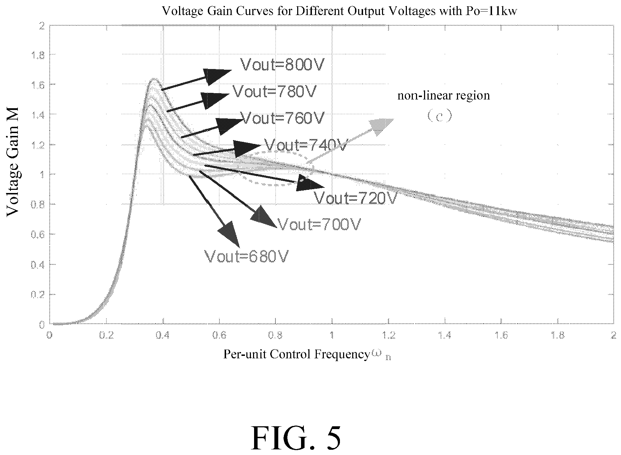

Based on the derivation and calculation above, the voltage gain M of CLLC resonant converter 42 can be plotted relative to the per-unit control frequency $\omega_n$, as shown in FIGs. 4-5. FIG. 4 illustrates, for different quality factors Q, curves of the voltage gain of the CLLC resonant converter 42 versus the normalized control frequency $\omega_n$. FIG. 5 illustrates, at an output power of 11kw and for different battery voltages, curves of the voltage gain of the CLLC resonant converter 42 versus the normalized control frequency $\omega_n$.

As described above, the rectifier 41 converts the DC power drawn from for example the 220V/50Hz power grid or the charging pile into DC power with a required voltage. The CLLC resonant converter 42 converts the converted DC power by the rectifier 41 into a required DC power and provides it to the energy system for distribution. Since the battery voltage $V_{dc\_out}$ is output based on characteristics of the battery itself, it is not controllable but is measurable. On this basis, inventors of the present invention propose a novel control scheme by which the instructing values for the rectifier 41 and CLLC resonant converter 42 are no longer fixed, but are dynamically determined according to the battery voltage acquired by actual sampling, so as to enable an effective all-regime control for the rectifier and CLLC resonant converter. Further, as shown in FIG. 4, for different quality factors Q, the voltage gain M of the CLLC resonant converter 42 does not always monotonically increase or decrease with the increase of the per-unit control frequency $\omega_n$ for the CLLC resonant converter 42. As shown in the non-linear regions (a) and (b) circled by dotted lines in FIG. 4, in these regions, the voltage gain M of the CLLC resonant converter 42 exhibits a nonlinear relationship with respect to the per-unit control frequency $\omega_n$. As an example, in non-linear region (a), the voltage gain M of the CLLC resonant converter decreases and then increases with the increase of the per-unit control frequency $\omega_n$, while in non-linear region (b), the voltage gain M first increases and then decreases. Likewise, in FIG. 5, a non-linear region (c) is circled by dotted lines for example. Based on analysis of the voltage gain curve of the CLLC resonant converter, the control scheme proposed by inventors of the present invention further enables the output voltage gain to exhibit a linear relationship with respect the control frequency for operation.

The present invention is also based on the following insights:

By analyzing the voltage gain curve of the CLLC resonant converter, inventors found that it has the following characteristics:

I) nonlinear regions only exist for $\omega_n < 1$, and for $\omega_n \geq 1$, the voltage gain M always decreases linearly with increasing $\omega_n$;
II) for $\omega_n = 1$, the voltage gain M=1;
III) for $\omega_n > 1$, the voltage gain M<1.

Thus, the output voltage gain can be guaranteed to exhibit a linear relationship with respect to the control frequency for operation as long as the switching frequency f is controlled such that $\omega_n \geq 1$ for the voltage gain M < 1.

Considering that the voltage gain of the CLLC resonant converter is the output voltage of that CLLC resonant converter divided by the input voltage thereof (i.e., $M=V_{dc\_out}/V_{dc}$), the voltage gain $M<1$ can be achieved by controlling $V_{dc}$ so that it is greater than $V_{dc\_out}$. For an on-board charger, the output voltage $V_{dc\_out}$ refers to both the output voltage of the CLLC resonant converter and the battery voltage of the electric vehicle, while the input voltage $V_{dc}$ refers to both the output DC voltage of the rectifier and the input voltage of the CLLC resonant converter. Since the battery voltage $V_{dc\_out}$ is output based on characteristics of the battery itself, it is not controllable but is measurable, and thus, $M<1$ can be achieved by controlling the rectifier so that its output voltage $V_{dc}$ is greater than the measured battery voltage $V_{dc\_out}$ based on the measured battery voltage $V_{dc\_out}$.

On the other hand, when controlling the CLLC resonant converter, $\omega_n=\omega/\omega_1\geq 1$ can be achieved by setting the switching frequency f so that it is greater than or equal to the resonant frequency $f_1$ (where $\omega=2\pi f$ and $\omega_1=2\pi f_1$). In addition, since the output power $P_{out}$ of the CLLC resonant converter can be calculated as $P_{out}=V_{dc\_out}I_{dc\_out}$ (where $I_{dc\_out}$ refers to the output current of the CLLC resonant converter), it is possible to enable the output power of the CLLC resonant converter to meet the value of power given by the Vehicle Control Unit (VCU) by making the output current $I_{dc\_out}$ of the CLLC resonant converter near or equal to the desired output current.

In this way, it can be realized that the voltage gain of the CLLC converter exhibits a linear relationship with respect to the per-unit control frequency $\omega_n$ throughout the operating interval of the CLLC resonant converter. Given

$$\omega_1 = \frac{1}{\sqrt{L_1 C_1}}.$$

, the resonant frequency $f_1$ of the CLLC resonant converter 42 depends on the primary-side equivalent inductance and the primary-side equivalent capacitance in a fundamental wave equivalent circuit of the CLLC resonant converter, and thus once the hardware settings are determined, this resonant frequency $f_1$ is accordingly fixed. On this basis, the voltage gain M of the CLLC resonant converter can be guaranteed to exhibit a linear relationship with respect to the switching frequency f by ensuring that the switching frequency f is controlled such that $\omega_n\geq 1$ for the voltage gain $M<1$.

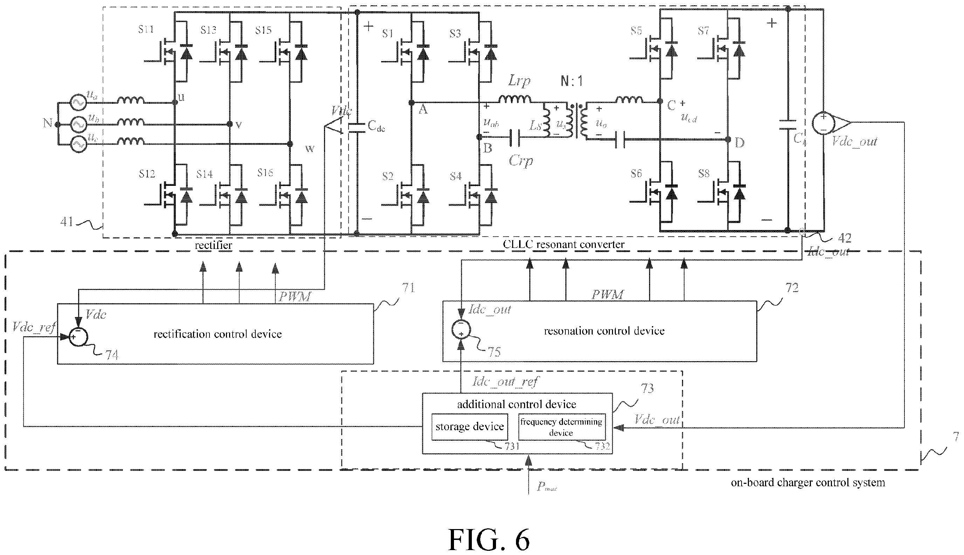

Based on the design principles described above, the present invention proposes an on-board charger control system 7 as shown in FIG. 6, which is coupled to the OBC 4. In an embodiment, the on-board charger control system 7 is incorporated in an energy system 10 of the electric vehicle. An on-board charger is shown in FIG. 6, and the on-board charger control system 7 comprises a rectification control device 71, a resonance control device 72, and an additional control device 73. According to an embodiment of the invention, the rectification control device 71 is coupled to the rectifier 41 in the OBC 4, the resonance control device 72 is coupled to the CLLC resonant converter 42 in the OBC 4, and the additional control device 73 is coupled to the rectification control device 71 and to the resonance control device 72.

According to an embodiment of the invention, the additional control device 73 is further coupled to a battery voltage measuring device (not shown in FIG. 6), or alternatively, the additional control device 73 comprises a battery voltage measuring device, and the battery voltage measuring device is configured to measure the battery voltage of the battery 1, i.e., the output voltage $V_{dc\_out}$ of the CLLC resonant converter 42.

The additional control device 73 is configured to determine a desired output voltage $V_{dc\_ref}$ for the rectifier 41 based on the battery voltage $V_{dc\_out}$, and provide the determined desired output voltage $V_{dc\_ref}$ to the rectification control device 71.

More specifically, referring back to the fundamental wave equivalent circuit shown in FIG. 3, the voltage gain

$$M = \frac{N * u_{cd\_FHA}}{u_{ab\_FHA}}$$

M of the CLLC resonant converter 42 can be expressed as , where $u_{cd\_FHA}=4V_{dc\_out}\sin(2\pi ft)$, $u_{ab\_FHA}=4V_{dc}\sin(2\pi ft)$, and where f refers to the switching frequency. That is, in accordance with the required voltage gain and based on the sampled battery voltage $V_{dc\_out}$, the additional control device 73 may determine a desired output voltage $V_{dc\_ref}$ for the rectifier 41 accordingly.

Further, to achieve $M<1$, it is necessary to ensure $V_{dc}>N*V_{dc\_out}$, where N refers to the voltage ratio of the primary side voltage to the secondary side voltage of the transformer in the CLLC resonant converter 42. Considering the harmonic factor, the above equation can be rewritten as $V_{dc}\geq N*V_{dc\_out}+V_{compen}$. In the above equation, $V_{compen}$ refers to a compensation value associated with the harmonic factor of the CLLC resonant converter, which is a constant derived from practical experience. For an 800V on-board charger, $V_{compen}$ can be taken as 20V. For other on-board chargers, such a compensation value can be determined accounting for the harmonic factors of the resonant converter of the on-board chargers. In conjunction with the voltage range [$V_{min}$, $V_{max}$] of the OBC 4 for full-power operation, the additional control device 73 may be further configured to determine a desired output voltage $V_{dc\_ref}$ for the rectifier 41 based on the following rules:

$$V_{dc\_ref} = \begin{cases} V_{min}, & if \left(V_{dc\_out} * N + V_{compen}\right) \leq V_{min} \\ \left(V_{dc\_out} * N + V_{compen}\right), & if \ V_{min} < \left(V_{dc\_out} * N + V_{compen}\right) \leq V_{max} \\ V_{max}, & if \left(V_{dc\_out} * N + V_{compen}\right) > V_{max} \end{cases}.$$

For an 800V on-board charger, its voltage range [$V_{min}$, $V_{max}$] for full-power operation is generally [680V, 800V], which means that $V_{min}$ is taken as 680V, and $V_{max}$ is taken as 800V. For other on-board chargers, $V_{min}$ and $V_{max}$ can be respectively determined based on the voltage range for full-power operation.

In addition, the additional control device 73 can be configured to determine a desired output current $I_{dc\_out\_ref}$ for the the CLLC resonant converter 42 based on the battery voltage $V_{dc\_out}$, and provide the determined desired output current $I_{dc\_out\_ref}$ to the resonance control device 72. More specifically, since the maximum power amplitude $P_{max}$ output by the CLLC resonant converter is a specified value of power to be achieved and provided based on the battery condition by the VCU of the vehicle, i.e., the output power is to be maintained at this maximum power amplitude $P_{max}$ unless there is an internal fault or a derating requirement, thereby the additional control device 73 can calculate the desired output current $I_{dc\_out\_ref}$ of the CLLC resonant converter 42 as $I_{dc\_out\_ref} = P_{max}/V_{dc\_out}$.

Further, in conjunction with the voltage range [$V_{min}$, $V_{max}$] of the OBC 4 for full-power operation, the additional control device 73 may be further configured to determine a desired output current $I_{dc\_out\_ref}$ for the CLLC resonant converter 42 based on the following rules:

$$I_{dc\_out\_ref} = \begin{cases} \frac{P_{max}}{V_{dc\_out}} * k_1, & if \left(V_{dc\_out} * N + V_{compen}\right) \leq V_{min} \\ \frac{P_{max}}{V_{dc\_out}}, & if \ V_{min} < \left(V_{dc\_out} * N + V_{compen}\right) \leq V_{max} \\ \frac{P_{max}}{V_{dc\_out}} * k_2, & if \left(V_{dc\_out} * N + V_{compen}\right) > V_{max} \end{cases},$$

wherein k1 and k2 refer to predetermined design derating factors, and $k_1 < 1$, $k_2 < 1$. Such values are given by the supplier based on their design specifications and may vary depending on the actual conditions from supplier to supplier. In general, k2 is usually set to 0 for safety of the on-board charger.

In addition, the additional control device 73 can further be configured to provide the switching frequency $f$ of the CLLC resonant converter 42, so that the resonance control device 72 controls the power switching devices S1-S8 of the CLLC resonant converter 42 based on the switching frequency $f$ of the CLLC resonant converter 42. In particular, when the battery voltage measuring device has measured the battery voltage and the additional control device 73 has determined a desired output voltage $V_{dc\_ref}$ for the rectifier 41 and a desired output current $I_{dc\_out\_ref}$ for the CLLC resonant converter 42, in conjunction with the fundamental wave equivalent circuit depicted in FIG. 3, the equivalent resistance of the CLLC resonant converter 42 can be calculated, and thus the quality factor Q can be calculated. Additionally, when the battery voltage measuring device has measured the battery voltage and the additional control device 73 has determined a desired output voltage $V_{dc\_ref}$ for the rectifier 41, the voltage gain M of the CLLC resonant converter 42 can be determined. Thus, based on the above derived function of the CLLC resonant converter with respect to the per-unit control frequency $\omega_n$, for the determined quality factor Q, the additional control device 73 can determine a per-unit control frequency $\omega_n$ for the CLLC resonant converter 42 that corresponds to the voltage gain M thereof, and thus determine a switching frequency f for the CLLC resonant converter 42 (wherein $\omega_n = \omega/\omega_1$ and $\omega = 2\pi f$).

Even further, the switching frequency f may be valued as greater than or equal to the resonant frequency $f_1$ of the CLLC resonant converter 42. As described above and with respect to FIG. 3, a pre-determined operating frequency may be expressed as $\omega_1 = \dfrac{1}{\sqrt{L_1 C_1}}$ and $\omega_1 = 2\pi f_1$, thus the resonant frequency $f_1$ may be determined based on the primary-side equivalent capacitance C1 and the primary-side equivalent inductance L1 in the fundamental equivalent circuit of the CLLC resonant converter 42.

Preferably, in an embodiment as shown in FIG. 6, the additional control device 73 may additionally include a storage device 731 that may be configured to store a correspondence of the voltage gain M, the quality factor Q to the per-unit control frequency $\omega_n$ of the CLLC resonant converter 42. Alternatively, the storage device 731 may be configured to store a correspondence of the voltage gain M, the quality factor Q to a per-unit switching frequency $f_n$ of the CLLC resonant converter 42, wherein the per-unit switching frequency $f_n$ is a ratio of the switching frequency $f$ to the resonant

EP 4 393 761 A1

frequency $f_1$, so that the additional control device 731 can determine the switching frequency $f$ of the CLLC resonant converter 42. In the embodiment, the additional control device 73 may further include a frequency determining device 732 that may be configured to determine, based on the correspondence stored in the storage device 731, the switching frequency $f$ of the CLLC resonant converter 42 corresponding to the determined voltage gain M and quality factor Q of the CLLC resonant converter 42.

In accordance with an embodiment of the invention, the rectification control device 71 may be configured to control the power switching devices S11-S16 on the three bridge arms of the rectifier 41, so that the output voltage $V_{dc}$ of the rectifier 41 is near or equal to the desired output voltage $V_{dc\_ref}$ of the rectifier 41. As a non-limiting embodiment, the rectification control device 71 may include a subtraction unit 74. The subtraction unit 74 is coupled to the additional control device 73 to obtain the desired output voltage $V_{dc\_ref}$ of the rectifier 41 provided by the additional control device 73, and the subtraction unit 74 may also coupled to a device for measuring the voltage of the rectifier 41 (not shown in FIG. 6) to obtain the present output voltage $V_{dc}$ of the rectifier 41. Thus, the subtraction unit 74 may perform a subtraction operation on the present output voltage $V_{dc}$ of the rectifier 41 and the desired output voltage $V_{dc\_ref}$ of the rectifier 41, and output the result of the subtraction operation to the rectification control device 71. The rectification control device 71 may control a duty cycle of a switching control signal applied to the rectifier 41, so that the output voltage $V_{dc}$ of the rectifier 41 is near or equal to the desired output voltage $V_{dc\_ref}$ of the rectifier 41. Alternatively, the rectification control device 71 may further include a logical device such as a comparator, or include other operation units or the combination thereof. When a comparator is adopted, the comparator may compare the present output voltage $V_{dc}$ of the rectifier 41 to the desired output voltage $V_{dc\_ref}$ of the rectifier 41, and output the result of comparison to the rectification control device 71, and the rectification control device 71 may control the duty cycle of the switching control signal applied to the rectifier 41 based on the result of comparison output by the comparator.

In accordance with an embodiment of the invention, the resonance control device 72 may be configured to control the power switching devices S1-S8 of the CLLC resonant converter 42. In particular, the switching frequency $f$ determined by the additional control device is applied to the CLLC resonant converter 42, so that the power switching devices S1-S8 of the CLLC resonant converter 42 may operate at the switching frequency $f$. In general, when the power switching devices S1-S8 of the CLLC resonant converter 42 operating at the switching frequency $f$, it can be achieved that the output current $I_{dc\_out}$ of the CLLC resonant converter 42 is near or equal to the desired output current $I_{dc\_out\_ref}$. According to an embodiment, the resonance control device 72 may be further configured to adjust, either directly or indirectly via other devices (such as, for example, the additional control device 73), the switching frequency $f$ determined by the additional control device 73 to $f_a$, based on a comparison of the difference DIFF between the output current $I_{dc\_out}$ and the desired output current $I_{dc\_out\_ref}$ of the CLLC resonant converter 42 with a predetermined threshold $T_{DIFF}$. As a non-limiting embodiment, the resonance control device 72 may include a subtraction unit 75. The subtraction unit 75 is coupled to the additional control device 73 to obtain the desired output current $I_{dc\_out\_ref}$ of the CLLC resonant converter 42 provided by the additional control device 73, and the subtraction unit 74 may also coupled to a current measuring device (not shown in FIG. 6) to obtain the present output current $I_{dc\_out}$ of the CLLC resonant converter 42. Thus, the subtraction unit 75 may perform a subtraction operation on the output current $I_{dc\_out}$ of the CLLC resonant converter 42 and the desired output current $I_{dc\_out\_ref}$ of the CLLC resonant converter 42, and output the result of the subtraction operation to the resonance control device 72. When the result of the subtraction operation is greater than a pre-determined threshold, the switching frequency of the CLLC resonant converter 42 may be adjusted so that the output current $I_{dc\_out}$ of the CLLC resonant converter 42 is near or equal to the desired output current $I_{dc\_out\_ref}$ of the CLLC resonant converter 42. In an embodiment, the switching frequency may be found depending on a present output current $I_{dc\_out}$ of the CLLC resonant converter and based on a pre-stored correspondence of the voltage gain M, the quality factor Q to the per-unit switching frequency $f_n$. Alternatively, the switching frequency of the CLLC resonant converter 42 may be changed to $f_a$ by increasing or decreasing heuristically one or more times in the vicinity of the present switching frequency $f$ of the CLLC resonant converter 42, and accordingly, a subtraction result between the actual output current at this switching frequency $f_a$ and the desired output current of the CLLC resonant converter 42 may be calculated by the subtraction unit 75, until the subtraction result is less than a threshold value. Alternatively, the resonance control device 72 may further include a logical device such as a comparator, or include other operation units or the combination thereof. When a comparator is adopted, the comparator may compare the output current $I_{dc\_out}$ of the the CLLC resonant converter 42 to the desired output current $I_{dc\_out\_ref}$ of the CLLC resonant converter 42, and output the result of comparison to the resonance control device 72, and the resonance control device 72 may control the switching frequency applied to the CLLC resonant converter 42 based on the result of comparison output by the comparator.

Thus, the on-board charger control system proposed in the invention is able to enable the CLLC resonant converter to operate normally, stably, and controllably throughout its operating interval.

As another implementation, the on-board charger control system 7 proposed in the invention may further incorporated into an on-board charger system which comprises the OBC 4, and the on-board charger control system 7 is coupled to the OBC 4.

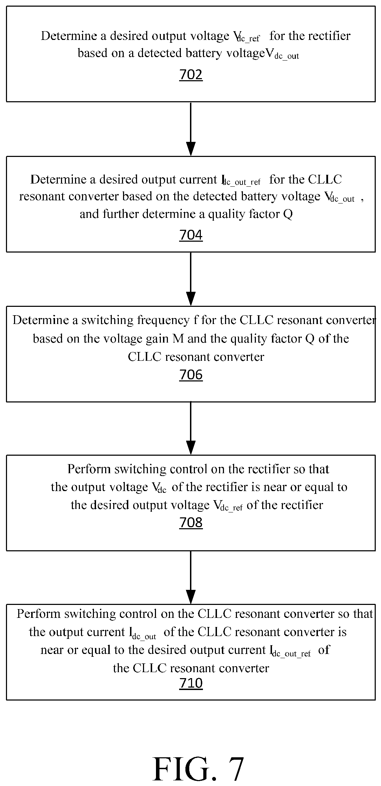

The invention further provides an on-board charger control method as shown in FIG. 7. In an embodiment of the invention, the on-board charger control system may control the OBC 4 via the on-board charger control method.

In step 702, a desired output voltage $V_{dc\_ref}$ of the rectifier 41 is determined based on a detected battery voltage $V_{dc\_out}$, and once the desired output voltage $V_{dc\_ref}$ of the rectifier 41 is determined, the voltage gain M can be determined. As described above and with respect to FIGs. 3 and 6, to achieve M<1, it is necessary to ensure that the input voltage of the CLLC resonant converter 42, i.e. the output voltage $V_{dc}$ of the rectifier 41, satisfies $V_{dc} > N*V_{dc\_out}$, where N refers to the voltage ratio of the primary side voltage to the secondary side voltage of the transformer in the CLLC resonant converter 42. Considering the harmonic factor, the above equation can be rewritten as $V_{dc} \geq N*V_{dc\_out} + V_{compen}$. In the above equation, $V_{compen}$ refers to a compensation value associated with the harmonic factor of the CLLC resonant converter, which is a constant derived from practical experience. In an embodiment, for an 800V on-board charger, $V_{compen}$ may be taken as 20V. For other on-board chargers, such a compensation value can be determined accounting for the harmonic factors of the resonant converter of the on-board chargers. In conjunction with the voltage range [$V_{min}$, $V_{max}$] of the OBC 4 for full-power operation, in step 702 the desired output voltage $V_{dc\_ref}$ of the rectifier 41 may further be determined based on the following rules:

$$V_{dc\_ref} = \begin{cases} V_{min}, & if \left(V_{dc\_out} * N + V_{compen}\right) \leq V_{min} \\ \left(V_{dc\_out} * N + V_{compen}\right), & if \ V_{min} < \left(V_{dc\_out} * N + V_{compen}\right) \leq V_{max} \\ V_{max}, & if \left(V_{dc\_out} * N + V_{compen}\right) > V_{max} \end{cases}.$$

For an 800V on-board charger, its voltage range [$V_{min}$, $V_{max}$] for full-power operation is generally [680V, 800V], which means that $V_{min}$ may be taken as 680V, and $V_{max}$ may be taken as 800V. For other on-board chargers, $V_{min}$ and $V_{max}$ can be respectively determined based on the voltage range for full-power operation.

In step 704, a desired output current $I_{dc\_out\_ref}$ is determined based on the battery voltage $V_{dc\_out}$, and as described above and in connection with FIG. 3, based on the fundamental wave equivalent circuit of the CLLC resonant converter 42, once the desired output current $I_{dc\_out\_ref}$ is determined based on the battery voltage $V_{dc\_out}$, the quality factor Q can be determined. As described above and with respect to FIGs. 3 and 6, given the maximum power amplitude $P_{max}$ output by the CLLC resonant converter, the desired output current $I_{dc\_out\_ref}$ of the CLLC resonant converter 42 can be calculated as $I_{dc\_out\_ref} = P_{max}/V_{dc\_out}$. In conjunction with the above voltage range [$V_{min}$, $V_{max}$] of the OBC 4 for full-power operation, in step 704, the desired output current $I_{dc\_out\_ref}$ of the CLLC resonant converter 42 may further be determined

$$I_{dc\_out\_ref} = \begin{cases} \frac{P_{max}}{V_{dc\_out}} * k_1, & if \left(V_{dc\_out} * N + V_{compen}\right) \leq V_{min} \\ \frac{P_{max}}{V_{dc\_out}}, & if \ V_{min} < \left(V_{dc\_out} * N + V_{compen}\right) \leq V_{max} \\ \frac{P_{max}}{V_{dc\_out}} * k_2, & if \left(V_{dc\_out} * N + V_{compen}\right) > V_{max} \end{cases},$$

based on the following rules: wherein k1 and k2 refer to predetermined design derating factors, and $k_1 < 1$, $k_2 < 1$. Such values are given by the supplier based on their design specifications and may vary depending on the actual conditions from supplier to supplier. In general, k2 is usually set to 0 for safety of the on-board charger.

In step 706, switching control is performed on the rectifier, so that the output voltage $V_{dc}$ of the rectifier 41 is near or equal to a desired output voltage $V_{dc\_ref}$ of the rectifier 41. As described above and with respect to FIG. 6, based on the subtraction operation by a subtraction unit or based on the comparison by a comparison unit, a rectification control method is used, such as by controlling a duty cycle of a switching control signal applied to the rectifier 41, so that the output voltage $V_{dc}$ of the rectifier 41 is near or equal to the desired output voltage $V_{dc\_ref}$ of the rectifier 41.

In step 708, a switching frequency *f* of the CLLC resonant converter is determined based on the voltage gain M and quality factor Q of the CLLC resonant converter 42. When the battery voltage has been measured and the desired output voltage $V_{dc\_ref}$ of the rectifier 41 and the desired output current $I_{dc\_out\_ref}$ of the CLLC resonant converter 42 have been determined, in conjunction with the fundamental wave equivalent circuit depicted in FIG. 3, the equivalent resistance of the CLLC resonant converter 42 can be calculated, and thus the quality factor Q can be calculated. In addition, when the battery voltage has been detected and the desired output voltage $V_{dc\_ref}$ of the rectifier 41 has been determined, the voltage gain M of the CLLC resonant converter 42 can be determined. Thus, based on the above derived function of the CLLC resonant converter with respect to the per-unit control frequency $\omega_n$, for the determined quality factor Q, a per-unit control frequency $\omega_n$ for the CLLC resonant converter 42 that corresponds to the voltage gain M thereof can be determined and thus a switching frequency $f$ of the CLLC resonant converter 42 can be determined(wherein $\omega_n=\omega/\omega_1$ and $\omega=2\pi f$). The switching frequency $f$ is greater than or equal to the resonant frequency $f_1$ of the CLLC resonant converter 42. As described above and with respect to FIG. 3, a pre-determined operating frequency may be expressed as

$$\omega_1 = \frac{1}{\sqrt{L_1 C_1}},$$ and $\omega_1=2\pi f_1$, thus the resonant frequency $f_1$ may be determined based on the primary-side equivalent capacitance C1 and the primary-side equivalent inductance L1 in the fundamental equivalent circuit of the CLLC resonant converter 42. Alternatively, a switching frequency f of the CLLC resonant converter 42 corresponding to the determined voltage gain M and quality factor Q of the CLLC resonant converter 42 can be determined based on a pre-stored correspondence of the voltage gain M, the quality factor Q to the per-unit control frequency $\omega_n$, or of the voltage gain M, the quality factor Q to the per-unit switching frequency $f_n$, wherein the per-unit switching frequency $f_n$ is the ratio of the switching frequency $f$ to the resonant frequency $f_1$.

In step 710, switching control is performed on the CLLC resonant converter 42 so that the output current $I_{dc\_out}$ of the CLLC resonant converter 42 is near or equal to the desired output current $I_{dc\_out\_ref}$ of the CLLC resonant converter 42. In an embodiment, performing switching control on the CLLC resonant converter 42 comprises performing switching control on the CLLC resonant converter 42 based on the switching frequency $f$ of the CLLC resonant converter 42. In particular, the switching frequency $f$ determined in step 708 is applied to the CLLC resonant converter 42, so that the CLLC resonant converter 42 may operate at the switching frequency $f$. In general, when the CLLC resonant converter 42 operating at the switching frequency $f$, it can be achieved that the output current $I_{dc\_out}$ of the CLLC resonant converter 42 is near or equal to the desired output current $I_{dc\_out\_ref}$ of the CLLC resonant converter 42. Additionally, in accordance with an embodiment, performing switching control on the CLLC resonant converter 42 may further comprise, based on a comparison of a difference DIFF between the output current $I_{dc\_out}$ and the desired output current $I_{dc\_out\_ref}$ of the CLLC resonant converter 42 with a pre-determined threshold $T_{DIFF}$, adjusting the determined switching frequency $f$ of the CLLC resonant converter 42 to $f_a$, and controlling the CLLC resonant converter 42 with the adjusted switching frequency $f_a$. As described above and with respect to FIG. 6, based on the result of subtraction operation by a subtraction unit or based on the result of comparison by a comparison unit, when the difference DIFF between the measured actual output current $I_{dc\_out}$ and the desired output current $I_{dc\_out\_ref}$ of the CLLC resonant converter 42 is greater than or equal to a pre-determined threshold $T_{DIFF}$, the switching frequency $f$ of the CLLC resonant converter 42 may be adjusted to ensure that the output current $I_{dc\_out}$ of the CLLC resonant converter 42 is near or equal to the desired output current $I_{dc\_out\_ref}$ of the CLLC resonant converter 42. In an embodiment, the switching frequency may be found depending on a present output current $I_{dc\_out}$ of the CLLC resonant converter and based on a pre-stored correspondence of the voltage gain M, the quality factor Q to the per-unit switching frequency $f_n$. Alternatively, the switching frequency of the CLLC resonant converter 42 may be changed to $f_a$ by one or more trials in the vicinity of the present switching frequency $f$ of the CLLC resonant converter 42, and accordingly, a subtraction result between the actual output current at this switching frequency $f_a$ and the desired output current of the CLLC resonant converter 42 may be calculated by the subtraction unit 75, until the subtraction result is less than a threshold value.

To sum up, the present invention proposes a scheme to enable the voltage gain of the CLLC resonant converter to exhibit a linear relationship with respect to the switching frequency throughout the operating interval of the CLLC resonant converter. With the technical solutions described in the present invention, the desired outputs of both the rectifier and the CLLC resonant converter can be varied based on the battery voltage, allowing the CLLC resonant converter to operate normally, stably, and controllably throughout its operating interval. Thus, compared to the existing hardware implementation, the technical solution proposed in the present invention is better adapted to the very wide ranges of voltage and power variation of high-voltage electric vehicles today.

The system and device described in embodiments of the invention may be implemented in hardware, software and the combination thereof.

Program code may be applied to input instructions to carry out the functions described herein and generate output information. The output information may be applied to one or more output device in a known manner. For purposes of the application, a control system includes any system having a processor such as, for example, a digital signal processor (DSP), a microcontroller, an application-specific integrated circuit (ASIC), or a microprocessor. Program code may be implemented in a high-level procedural programming language or an object-oriented programming language to communicate with the control system.

One or more aspects of at least one embodiment may be realized by representational instructions stored on a machine-readable medium representing various logics in a processor that, when read by a machine, causes the machine to make the logic used to perform the techniques described herein.

Preferred embodiments of the invention are described above in the detailed description. Nevertheless, it is to be understood that, various embodiments and variations may be employed without departing from the wide spirit and range of the present invention. In accordance with the concept of the invention, numerous modifications and variations can be made by those of ordinary skill in the art without creative labor. Therefore, any technical solution that can be obtained by logical analysis, reasoning or limited experimentation by those skilled in the art on the basis of the prior art in accordance with the concept of the invention shall fall within the scope of protection determined from the claims of the invention.

**Claims**

1. An on-board charger control system, the on-board charger comprising a rectifier and a CLLC resonant converter connected in series with the rectifier, to charge an on-board battery, wherein the on-board charger control system comprises:

   a rectification control device configured to perform switching control on the rectifier, so that the output voltage $V_{dc}$ of the rectifier is near or equal to a desired output voltage $V_{dc\_ref}$ of the rectifier;
   a resonance control device configured to perform switching control on the CLLC resonant converter; and
   an additional control device configured to:

   determine the desired output voltage $V_{dc\_ref}$ for the rectifier based on a battery voltage $V_{dc\_out}$, and provide the determined desired output voltage $V_{dc\_ref}$ to the rectification control device;
   determine a desired output current $I_{dc\_out\_ref}$ for the CLLC resonant converter based on the battery voltage $V_{dc\_out}$, and provide the determined desired output current $I_{dc\_out\_ref}$ to the resonance control device; and
   provide, to the resonance control device, a switching frequency $f$ of the CLLC resonant converter, so that the resonance control device performs switching control on the CLLC resonant converter based on the switching frequency $f$ of the CLLC resonant converter, wherein the switching frequency $f$ is determined based on a voltage gain M and a quality factor Q of the CLLC resonant converter.

2. The on-board charger control system of claim 1, wherein,
   the additional control device is further configured to:

   determine the desired output voltage $V_{dc\_ref}$ for the rectifier based on the battery voltage $V_{dc\_out}$ so that the voltage gain M of the CLLC resonant converter is less than 1; and
   determine the desired output current $I_{dc\_out\_ref}$ for the CLLC resonant converter based on the battery voltage $V_{dc\_out}$, to determine the quality factor Q of the CLLC resonant converter; and
   wherein the switching frequency $f$ of the CLLC resonant converter determined based on the voltage gain M and quality factor Q of the CLLC resonant converter is greater than or equal to a resonant frequency $f_1$ of the CLLC resonant converter, and
   wherein the resonant frequency $f_1$ is based on an inductance and capacitance on a primary side of a fundamental wave equivalent circuit of the CLLC resonant converter.

3. The on-board charger control system of claim 2, wherein the additional control device further comprises:

   a storage device for storing a correspondence of the voltage gain M, the quality factor Q to a per-unit switching frequency $f_n$ of the CLLC resonant converter, wherein the per-unit switching frequency $f_n$ is a ratio of the switching frequency $f$ to the resonant frequency $f_1$; and
   a frequency determining device configured to determine, based on the correspondence stored in the storage device, the switching frequency $f$ of the CLLC resonant converter corresponding to the determined voltage gain M and quality factor Q of the CLLC resonant converter.

4. The on-board charger control system of claim 3, wherein the resonance control device is further configured to:

   perform switching control on the CLLC resonant converter at the switching frequency $f$ of the CLLC resonant converter;
   acquire an output current $I_{dc\_out}$ of the CLLC resonant converter;
   adjust, in response to a difference DIFF between the acquired output current $I_{dc\_out}$ of the CLLC resonant converter and the desired output current $I_{dc\_out\_ref}$ of the CLLC resonant converter being greater than a predetermined threshold $T_{DIFF}$, the switching frequency f of the CLLC resonant converter to an adjusted switching

frequency $f_a$ by:

searching the storage device for the stored correspondence of the voltage gain M, the quality factor Q to the per-unit switching frequency $f_n$ of the CLLC resonant converter, to determine a possible value for the adjusted switching frequency $f_a$, or
increasing or decreasing, heuristically one or more times, the switching frequency $f$ applied to the CLLC resonant converter in the vicinity of the switching frequency $f$ of the CLLC resonant converter based on the difference DIFF, until the difference DIFF is less than the threshold $T_{DIFF}$; and

perform switching control on the CLLC resonant converter at the adjusted switching frequency $f_a$.

5. The on-board charger control system of claim 2, wherein,

the battery voltage $V_{dc\_out}$ has a desired voltage range in operation, the desired voltage range being $[V_{min}, V_{max}]$, and
the additional control device is further configured to:

determine the desired output voltage $V_{dc\_ref}$ to be $V_{min}$, and the desired output current $I_{dc\_out\_ref}$ to be $(P_{max}/V_{dc\_out})*k_1$, if the battery voltage $V_{dc\_out}$ satisfies $(V_{dc\_out}*N+V_{compen}) \leq V_{min}$,
determine the desired output voltage $V_{dc\_ref}$ to be $(V_{dc\_out}*N+V_{compen})$ and the desired output current $I_{dc\_out\_ref}$ to be $(P_{max}/V_{dc\_out})$, if the battery voltage $V_{dc\_out}$ satisfies $V_{min} < (V_{dc\_out}*N+V_{compen}) \leq V_{max}$, or
determine the desired output voltage $V_{dc\_ref}$ to be $V_{max}$, and the desired output current $I_{dc\_out\_ref}$ to be $(P_{max}/V_{dc\_out})*k_2$, if the battery voltage $V_{dc\_out}$ satisfies $(V_{dc\_out}*N+V_{compen}) > V_{max}$,
wherein N refers to a voltage ratio of a primary side voltage to a secondary side voltage of a transformer in the CLLC resonant converter, $V_{compen}$ refers to an empirical compensation value associated with the desired voltage range and harmonic factors of the CLLC resonant converter, $P_{max}$ refers to a specified value of a maximum power given by a vehicle control unit (VCU) according to conditions of the on-board battery, and $k_1$ and $k_2$ refer to predetermined design derating factors and are both less than 1.

6. The on-board charger control system of claim 5, wherein for an 800V on-board charger, $V_{min}$ is taken as 680 volts, $V_{max}$ is taken as 800 volts, and $V_{compen}$ is taken as 20 volts.

7. An on-board charger system, comprising:

an on-board charger comprising a rectifier and a CLLC resonant converter connected in series with the rectifier; and
the on-board charger control system of any of claims 1-6, the on-board charger control system coupled to the on-board charger.

8. An on-board charger control method, the on-board charger comprising a rectifier and a CLLC resonant converter connected in series with the rectifier, to charge an on-board battery, wherein the on-board charger control method comprises:

determining a desired output voltage $V_{dc\_ref}$ for the rectifier based on a detected battery voltage $V_{dc\_out}$;
determining a desired output current $I_{dc\_out\_ref}$ for the CLLC resonant converter based on the battery voltage $V_{dc\_out}$;
determining a switching frequency $f$ for the CLLC resonant converter based on a voltage gain M and a quality factor Q of the CLLC resonant converter;
performing switching control on the rectifier so that the output voltage $V_{dc}$ of the rectifier is near or equal to the determined desired output voltage $V_{dc\_ref}$ of the rectifier; and
performing switching control on the CLLC resonant converter,
wherein performing switching control on the CLLC resonant converter comprising performing switching control on the CLLC resonant converter based on the determined switching frequency $f$ of the CLLC resonant converter.

9. The on-board charger control method of claim 8, wherein,

determining the desired output voltage $V_{dc\_ref}$ for the rectifier based on the battery voltage $V_{dc\_out}$ comprises determining the desired output voltage $V_{dc\_ref}$ for the rectifier based on the battery voltage $V_{dc\_out}$ so that the voltage gain M of the CLLC resonant converter is less than 1;

determining the desired output current $I_{dc\_out\_ref}$ for the CLLC resonant converter based on the battery voltage $V_{dc\_out}$ comprises determining the desired output current $I_{dc\_out\_ref}$ for the CLLC resonant converter based on the battery voltage $V_{dc\_out}$, to determine the quality factor Q of the CLLC resonant converter; and

the switching frequency $f$ of the CLLC resonant converter determined based on the voltage gain M and quality factor Q of the CLLC resonant converter is greater than or equal to a resonant frequency $f_1$ of the CLLC resonant converter, wherein the resonant frequency $f_1$ is based on an inductance and capacitance on a primary side of a fundamental wave equivalent circuit of the CLLC resonant converter.

10. The on-board charger control method of claim 9, further comprising:

determining, based on a pre-stored correspondence of the voltage gain M, the quality factor Q to a per-unit switching frequency $f_n$ of the CLLC resonant converter, the switching frequency $f$ of the CLLC resonant converter corresponding to the determined voltage gain M and quality factor Q of the CLLC resonant converter.

11. The on-board charger control method of claim 10, wherein performing switching control on the CLLC resonant converter based on the determined switching frequency $f$ of the CLLC resonant converter comprises:

performing switching control on the CLLC resonant converter at the determined switching frequency $f$ of the CLLC resonant converter;

acquiring an output current $I_{dc\_out}$ of the CLLC resonant converter;

adjusting, in response to a difference DIFF between the acquired output current $I_{dc\_out}$ of the CLLC resonant converter and the desired output current $I_{dc\_out\_ref}$ of the CLLC resonant converter being greater than a pre-determined threshold $T_{DIFF}$, the determined switching frequency $f$ of the CLLC resonant converter to an adjusted switching frequency $f_a$ by:

searching for the pre-stored correspondence of the voltage gain M, the quality factor Q to the per-unit switching frequency $f_n$ of the CLLC resonant converter, to determine a possible value for the adjusted switching frequency $f_a$, or

increasing or decreasing, heuristically one or more times, the switching frequency $f$ applied to the CLLC resonant converter in the vicinity of the determined switching frequency $f$ of the CLLC resonant converter based on the difference DIFF, until the difference DIFF is less than the threshold $T_{DIFF}$; and

performing switching control on the CLLC resonant converter at the adjusted switching frequency $f_a$.

12. The on-board charger control method of claim 9, wherein,

the battery voltage $V_{dc\_out}$ has a desired voltage range in operation, the desired voltage range being $[V_{min}, V_{max}]$, determining the desired output voltage $V_{dc\_ref}$ for the rectifier based on the detected battery voltage $V_{dc\_out}$ further comprises:

determining the desired output voltage $V_{dc\_ref}$ to be $V_{min}$ if the battery voltage $V_{dc\_out}$ satisfies $(V_{dc\_out}*N+V_{compen}) \leq V_{min}$,

determining the desired output voltage $V_{dc\_ref}$ to be $(V_{dc\_out}*N+V_{compen})$ if the battery voltage $V_{dc\_out}$ satisfies $V_{min} < (V_{dc\_out}*N+V_{compen}) \leq V_{max}$, or

determining the desired output voltage $V_{dc\_ref}$ to be $V_{max}$ if the battery voltage $V_{dc\_out}$ satisfies $(V_{dc\_out}*N+V_{compen}) > V_{max}$,

and determining the desired output current $I_{dc\_out\_ref}$ for the CLLC resonant converter based on the battery voltage $V_{dc\_out}$ further comprises:

determining the desired output current $I_{dc\_out\_ref}$ to be $(P_{max}/V_{dc\_out})*k_1$ if the battery voltage $V_{dc\_out}$ satisfies $(V_{dc\_out}*N+V_{compen}) \leq V_{min}$,

determining the desired output current $I_{dc\_out\_ref}$ to be $(P_{max}/V_{dc\_out})$ if the battery voltage $V_{dc\_out}$ satisfies $V_{min} < (V_{dc\_out}*N+V_{compen}) \leq V_{max}$, or

determining the desired output current $I_{dc\_out\_ref}$ to be $(P_{max}/V_{dc\_out})*k_2$ if the battery voltage $V_{dc\_out}$ satisfies $(V_{dc\_out}*N+V_{compen}) > V_{max}$,

wherein N refers to a voltage ratio of a primary side voltage to a secondary side voltage of a transformer in the CLLC resonant converter, $V_{compen}$ refers to an empirical compensation value associated with the desired voltage range and harmonic factors of the CLLC resonant converter, $P_{max}$ refers to a specified value of a maximum power given by a vehicle control unit (VCU) according to conditions of the on-board

battery, and $k_1$ and $k_2$ refer to predetermined design derating factors and are both less than 1.

FIG. 1

FIG. 2

FIG. 3

Voltage Gain Curves for Different Qs

Q=0.3
Q=0.4
Q=0.5
Q=0.6
Q=0.7

non-linear region   non-linear region

(a)   (b)

Voltage Gain M

Per-unit Control Frequency $\omega_n$

FIG. 4

Voltage Gain Curves for Different Output Voltages with Po=11kw

FIG. 5

FIG. 6

EP 4 393 761 A1

Determine a desired output voltage $V_{dc\_ref}$ for the rectifier based on a detected battery voltage $V_{dc\_out}$
702

Determine a desired output current $I_{dc\_out\_ref}$ for the CLLC resonant converter based on the detected battery voltage $V_{dc\_out}$ , and further determine a quality factor Q
704

Determine a switching frequency f for the CLLC resonant converter based on the voltage gain M and the quality factor Q of the CLLC resonant converter
706

Perform switching control on the rectifier so that the output voltage $V_{dc}$ of the rectifier is near or equal to the desired output voltage $V_{dc\_ref}$ of the rectifier
708

Perform switching control on the CLLC resonant converter so that the output current $I_{dc\_out}$ of the CLLC resonant converter is near or equal to the desired output current $I_{dc\_out\_ref}$ of the CLLC resonant converter
710

FIG. 7

Europäisches
Patentamt

European
Patent Office

Office européen
des brevets

# EUROPEAN SEARCH REPORT

Application Number

EP 23 21 7458

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Chaohui Liu: "Analysis, design and control of DC-DC resonant converter for on-board bidirectional battery charger in electric vehicles", <br><br> 1 February 2017 (2017-02-01), pages 1-233, XP093156492, <br> Retrieved from the Internet: <br> URL:https://etheses.whiterose.ac.uk/17528/1/Chaohui%20Liu_Thesis_Final_2017-05-30.pdf <br> * pages 32-132 * <br> ----- | 1-6 | INV. <br> B60L53/22 <br> H02M3/00 <br> H02J7/06 |
| X | LI BIN ET AL: "A High-Efficiency High-Density Wide-Bandgap Device-Based Bidirectional On-Board Charger", <br> IEEE JOURNAL OF EMERGING AND SELECTED TOPICS IN POWER ELECTRONICS, IEEE, PISCATAWAY, NJ, USA, <br> vol. 6, no. 3, <br> 1 September 2018 (2018-09-01), pages 1627-1636, XP011688293, <br> ISSN: 2168-6777, DOI: 10.1109/JESTPE.2018.2845846 <br> [retrieved on 2018-08-07] <br> * the whole document * <br> ----- | 1-12 | |
| | | | TECHNICAL FIELDS SEARCHED (IPC) |
| | | | B60L <br> H02M <br> H02J |
| | -/-- | | |

The present search report has been drawn up for all claims

| Place of search | Date of completion of the search | Examiner |
|---|---|---|
| The Hague | 29 April 2024 | Gücin, Taha |

EPO FORM 1503 03.82 (P04C01)

Europäisches
Patentamt

European
Patent Office

Office européen
des brevets

# EUROPEAN SEARCH REPORT

Application Number

**EP 23 21 7458**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BUCCELLA CONCETTINA ET AL: "Observer-Based Control of LLC DC/DC Resonant Converter Using Extended Describing Functions", IEEE TRANSACTIONS ON POWER ELECTRONICS, INSTITUTE OF ELECTRICAL AND ELECTRONICS ENGINEERS, USA, vol. 30, no. 10, 1 October 2015 (2015-10-01), pages 5881-5891, XP011582434, ISSN: 0885-8993, DOI: 10.1109/TPEL.2014.2371137 [retrieved on 2015-05-22] * the whole document * | 1-12 | |
| A | ZHANG SHANLU ET AL: "Analysis and optimal parameter selection of Full bridge bidirectional CLLC converter for EV", 2021 IEEE 16TH CONFERENCE ON INDUSTRIAL ELECTRONICS AND APPLICATIONS (ICIEA), IEEE, 1 August 2021 (2021-08-01), pages 751-756, XP033965974, DOI: 10.1109/ICIEA51954.2021.9516210 [retrieved on 2021-08-17] * the whole document * | 1-12 | TECHNICAL FIELDS SEARCHED (IPC) |

The present search report has been drawn up for all claims

| Place of search | Date of completion of the search | Examiner |
|---|---|---|
| The Hague | 29 April 2024 | Gücin, Taha |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)